(19)

**Europäisches Patentamt**
**European Patent Office**
**Office européen des brevets**

(11) **EP 3 351 606 A1**

(12) **EUROPEAN PATENT APPLICATION**

(43) Date of publication:
**25.07.2018 Bulletin 2018/30**

(51) Int Cl.:
***C09J 7/29*** *(2018.01)*

(21) Application number: **18150233.7**

(22) Date of filing: **03.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **20.01.2017 PT 109870**

(71) Applicant: **Heliotextil-Etiquetas E Passamanarias S.A.**
**3701-914 São João da Madeira (PT)**

(72) Inventor: **BULHOSA DE AGUIAR PACHECO, JOSÉ MIGUEL**
**3700 SÃO JOÃO DA MADEIRA (PT)**

(74) Representative: **Pereira da Cruz, Joao**
**J. Pereira da Cruz, S.A.**
**Rua Vitor Cordon, 14**
**1249-103 Lisboa (PT)**

(54) **HOT-TRANSFER ADHESIVE ELEMENTS WITH EMBEDDED ELECTRONIC COMPONENTS AND THEIR MANUFACTURING PROCESS**

(57)     The present invention relates to hot-transfer adhesive elements with embedded passive electronic components and their manufacturing process, which can be associated in more complex electrical circuits with specific functions. These hot-transfer adhesive elements are transferred to the final part by a hot pressing process.

Fig. 1

## Description

## Field of the Invention

The present invention relates to hot-transfer adhesive elements with embedded electronic components and their manufacturing process, which can be associated in more complex circuits with specific functions. The hot-transfer adhesive elements are preferably textile materials and the components are preferably passive. These hot-transfer adhesive elements are transferred to the final part using a pressing process and temperature treatment.

## State of the art of the invention

Nowadays, there are hot-transfers that are just images printed by screen printing process - digital, rotogravure or conjugation of both - on a film, wherein a final layer of hot-transfer adhesive is compatible with the substrate on which the image will be applied. The image is usually obtained by overlapping several layers of paint with different colors and designs. Next, this image is transferred/applied to a surface by a hot pressing process, and the film where the image was initially printed is then released. These elements are also known simply as "transfers" in the Anglo-Saxon language.

Included in the hot-transfers, there are the textile hot-transfers which are just hot-transfer adhesive elements which are applied on textile surfaces, i.e. fabrics, by a hot pressing process, releasing thereafter the film where the image was initially printed.

Accordingly, in this method of applying an object on a surface, whether this is textile or not - and where the object can be a drawing, message, illustration or visibility enhancement element, identified in this application by the reference number (2) - the hot-transfer adhesive element comprises:

- Film (1) doped with a substance that promotes the release of objects during their application to surfaces, and also has:

  ◦ Object (2);
  ◦ Glue/adhesive layer (5);
  ◦ At least one paint layer (where the object (2) is illustrated).

There are no hot-transfer adhesive elements known in the state of the art applied by transfer processes and comprising integrated electronic components, that is, with any discrete device or basic physical entity capable of affecting the movement of the electrons and the associated fields according to a given physical law. In the case of the present invention, these electronic components are preferably passive, i.e., electronic components that are not able to supply power to a circuit and, as a consequence, these components are not able to amplify an electrical signal (increasing their power) although they can increase voltage or current separately, as in the case of transformers or resonant circuits. Examples of passive electronic components are resistors, capacitors, inductors and transformers.

In turn, being these passive electronic components embedded in the hot-transfer device, they can be associated in circuits with specific functions, while currently only its application for the stamping of objects in fabrics is known.

In the same hot-transfer device, different components or groups of components may be included, which can be associated in circuits with specific functions.

The hot-transfer adhesive elements, which are the object of the present invention, can be used to interconnect or be part of wearable technology systems, currently known simply as "wearable", in textile products, or to functionalize surfaces, that is, a hot-transfer adhesive element containing such circuits, i.e. the present invention, can be later applied on a compatible surface using a pressing process and temperature treatment, according to predetermined conditions. For example, in a practical embodiment, this hot-transfer adhesive element can be materialized in a pocket with features of wearable device, as described below in the present document.

## Terms and definitions

For a better understanding of the present invention and of its description, the following definitions should be considered:

- "Wearable", English term for small portable equipment that people can use on their body or clothing, with the most common Portuguese designation being "vestiveis" technologies/elements;
- Conductor material, type of material where an electric current in one or two directions may take place when exposed to an electric field. The electric current appears because the material has enough free electric charges, usually electrons, for this purpose. The conductive materials used in this invention are isotropic because the electric current is always in the same direction of the electric field. The conductive materials used in this invention have a sheet resistance lower than 4 M$\Omega$/$\square$ (ohm per square);
- Insulation material, a material that has no free charges. Therefore, when subjected to an electric field, it is not able to establish a free electric current. Since there are no perfect insulators, there always is a small number of free charges; capable of establishing a residual current. However, this residual current is usually several orders of magnitude lower than that circulating in the circuit where the insulator is applied;

- Sheet resistance, designation used when it is intend to measure the resistance of very thin conductive films of uniform thickness, usually formed by deposition or printing. The value of the sheet resistance does not vary with the dimensions of the sheet, and therefore is an important value for characterizing the electrical conductivity of materials arranged in the form of a thin film. Sheet resistance is a special case of resistivity for a film with uniform thickness, wherein the resistivity is usually expressed in $(\Omega.m^2/m)$, and the sheet resistance $(\Omega.m^2/m^2)$ is obtained when dividing the resistivity by the thickness of the sheet in meters, i.e., the terms in meters cancel out, just remaining that representing a special imaginary square, and so the sheet resistance value is usually expressed in $(\Omega/\square)$;

- Dielectric rigidity, designation normally used to represent the limit value of the electric field applied to an insulating material with a certain thickness, wherein, from this value on, the atoms of the material ionize and mobile charges are generated, and therefore no longer function as an insulator. The dielectric rigidity is usually expressed in (kV/mm).

**Description of the Figures**

Indication of reference numbers

**[0010]**

(1) Flexible film doped with a substance that promotes the release of the hot-transfer device when applied, and which is preferably made of polyester or paper;

(2) Object (drawing/illustration/text) covering the circuit and corresponding to the visible part of the hot-transfer adhesive element after being applied on the final part, consisting of one or more layers of paint of different colors;

(3) Layer of conductive material with controlled resistivity, defined by the conductivity of the material and thickness of the applied layer;

(4) Layer of conductive material of low resistivity;

(5) Final adhesive layer that will bind the hot-transfer adhesive element to the final surface;

(6) Connection zone to the exterior;

(7) Insulation layer with controlled dielectric properties;

(8) Zone of material with electrical conductivity.

(9) Practical application of capacitive keys in a textile hot-transfer device;

(10) Practical application in gloves allowing to improve the capacitive coupling between the human body and touch screens;

(11) Front view of the hot-transfer adhesive element after being applied;

(12) RFID integrated circuit.

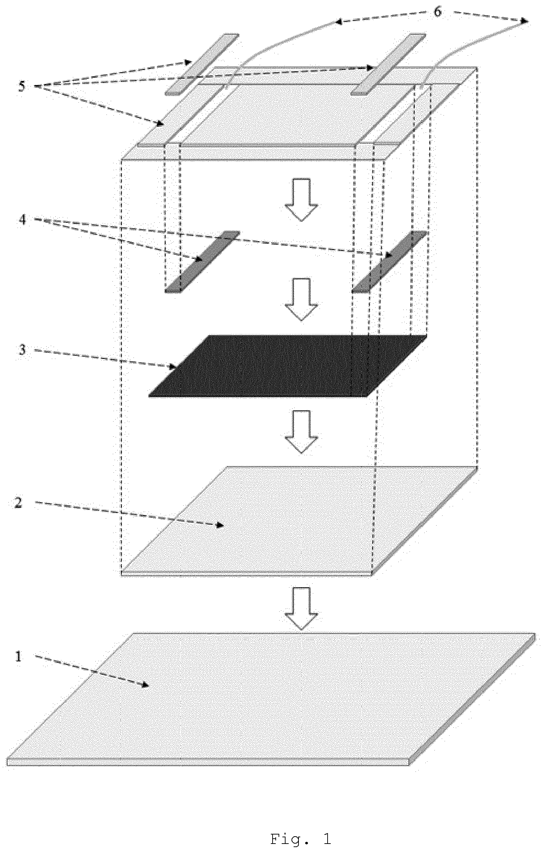

Fig. 1 - Example of construction of a hot-transfer device with a printed resistance.

Fig. 2 - Arrangement of a resistor that can be integrated in a hot-transfer adhesive element object of the present invention.

Fig. 3 - Capacitive key or sensor that can be integrated in a hot-transfer adhesive element object of the present invention.

Fig. 4 - Example of a signal transformer that can be integrated in a hot-transfer adhesive element object of the present invention.

Fig. 5 - Example of an inductor that can be integrated in a hot-transfer adhesive element object of the present invention.

Fig. 6 - Sketch of a radio frequency (UHF) antenna that can be integrated in a hot-transfer adhesive element object of the present invention.

Fig. 7 - Structure of a condenser that can be integrated in a hot-transfer adhesive element object of the present invention.

**Detailed description of the invention**

The present invention relates to hot-transfer adhesive elements with embedded electronic components and their manufacturing process, which can be associated in circuits with specific functions. The hot-transfer adhesive elements are preferably textile materials and the components are preferably passive.

The present invention relates to hot-transfer adhesive elements identical to those mentioned above, i.e. a hot-transfer adhesive element consisting of several layers of different materials, usually an aesthetic element (2), preferably flexible paints, a final adhesive layer (5) on a carrier film (1) doped with a substance which promotes the release of the paints and adhesive during the process of transferring the hot-transfer adhesive element to the final surface, but at least one more intermediate layer is added between the aesthetic element (2) and the adhesive layer (5), said intermediate layer being made of electrically conductive material (3) and/or low resistivity material (4), which preferably may consist of paints formulated with conductive materials.

If the intermediate layers (3) and (4) consist of paints formulated with conductive materials, these are conventional paints which are available in the state of the art, which are integrated into the manufacturing process of the textile hot-transfer device and are used according to certain specific drawings and are overlapped in layers in order to create the circuits embedded in the hot-transfer adhesive element described in this application.

In addition, the intermediate layers of conductive paint (3) and (4) are conjugated with layers of insulating material in order to create the passive component or the basic components aggregate in a more complex circuit, i.e., the conductive paint layers (3) and (4) when arranged as exemplified in the Figures are the "body" of the electronic components. The structures of the electronic components as well as the connections to the exterior are drawn in the conductive paint layers (3) and (4) .

In the present invention, besides being possible to affect the resistivity of the material by conjugating paints with different conductive materials and respective resistivity, it is also possible to modify the sheet resistance of the final deposition because the hot-transfer adhesive elements described herein are manufactured through a screen printing process, and so the thickness of a material layer can be controlled by the number of passages of the same material in the printing machine. In fact, the concept of sheet resistance is a theoretical concept for the characterization of the electrical resistance of thin surfaces or membranes.

The conductive materials that constitute the electrically conductive paints described herein are, among other, carbon, graphite, graphene, silver and copper. These conductive paint layers (3) and (4) are designed according to specific patterns which will create the final circuits, and thus impart the intended functionality to the hot-transfer adhesive elements.

These possibilities are also valid for the insulation material layers and, in this case, taking advantage of the screen printing process, the thickness is controlled in order to affect the total dielectric rigidity of the layer. Dielectric rigidity represents the ability of an electricity insulating material to remain as insulator. Thus, if there are two layers of conductive material separated by a layer of dielectric or insulating material and if an increasing electric potential difference is applied to the conductive layers, a certain voltage value will be reached in which the insulation layer-"breaks". Therefore, by increasing the layer thickness the respective insulation capacity also increases.

As mentioned before, with this technique it is possible to print passive electronic components as well as aggregates of these basic elements capable of constituting more complex circuits with specific functions and, although they can be handmade, for development purposes these elements are produced in industrial printing machines, mainly screen printing equipment or rotogravure equipment in some cases.

For example, a capacitor is obtained by printing three intermediate layers between the object (2) and the layer (5):

- the first intermediate layer of conductive material;
- a second intermediate layer of insulating material with thickness **d;** and
- a third intermediate layer of conductive material;

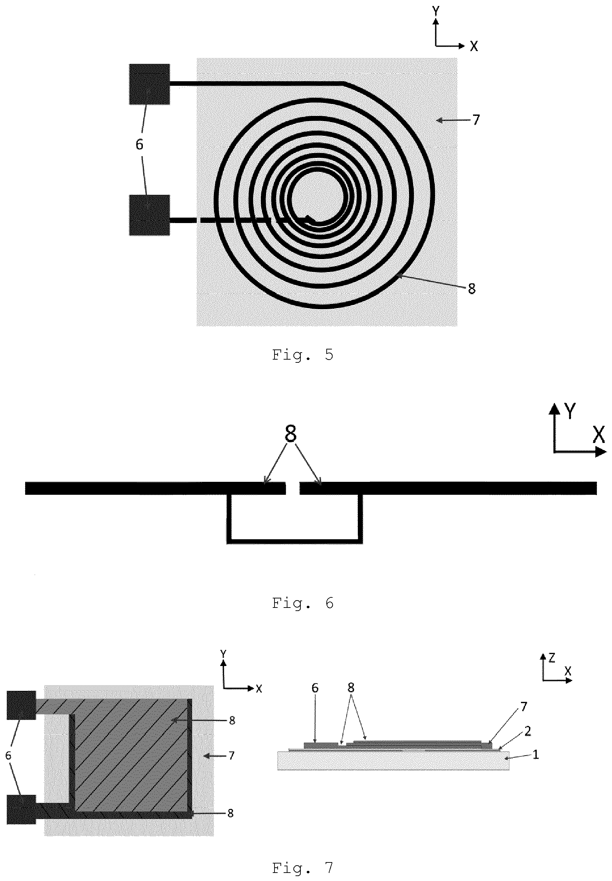

leaving connections to the exterior - structure shown in Fig. 7.

The area of the conductive layers, the thickness **d** and the dielectric constant of the insulation layer will determine the capacity of the capacitor thus constructed. The capacity of the constructed capacitor is usually expressed by the formula:

$$C = \frac{A \times \varepsilon_0 \times \varepsilon_\tau}{d},$$

where

C is the capacity expressed in Faraday;
A is the area where the plates are overlapping (m$^2$) ;
$\varepsilon_0$ is the dielectric constant of free space ($\varepsilon_0 \approx 8,854 \times 10^{-12}$ F·m$^{-1}$) ;
$\varepsilon_\tau$ is the dielectric constant of the material used as insulator;
$d$ is the thickness of the insulation layer.

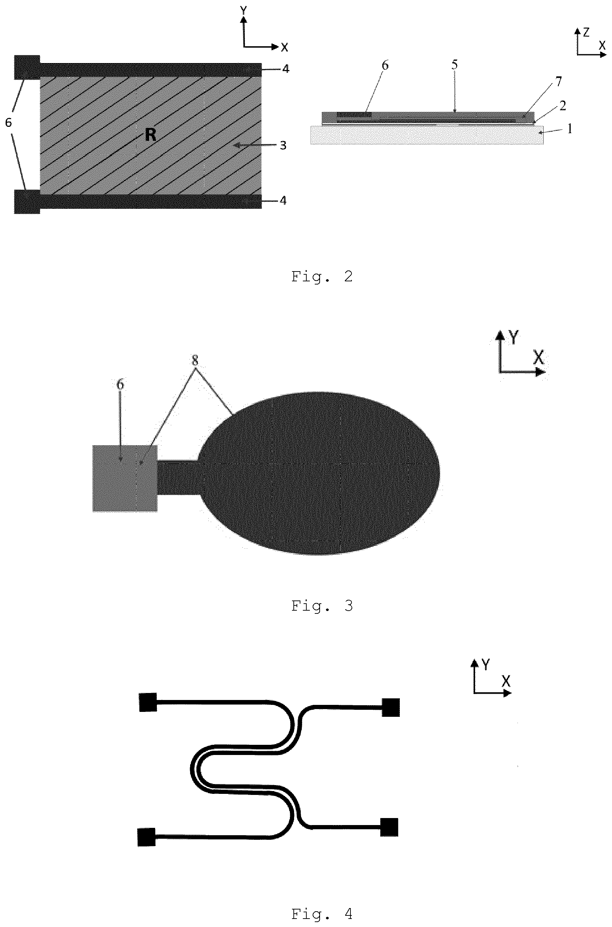

Another example of the manufacturing method of these elements is shown in Fig. 2, where a resistance is obtained by printing two intermediate layers between the object (2) and the layer (5):

- the first intermediate layer is a rectangle of conductive material with electrical resistivity (3);
- the second intermediate layer is made of a material with good electrical conductivity and it comprises two smaller rectangles (4) at the ends of the previous layer. This second layer is to make uniform the electrical potential at the ends of the layer (3) and the electric current from the terminals (6). It is obvious that the resistance value depends on the material used and on the dimensions and thickness of the resistive layer. The component must be designed in order to obtain the desired value.

Another possibility is the integration of one or more hot-transfer adhesive elements into a surface thus making it functional, for example in the case of a dashboard or control console in a vehicle or another device.

The following are the passive electronic components that can be integrated into a hot-transfer device, and possible applications:

- Conductive lines and planes for electrical and radiofrequency signals, usually known simply as "Striplines" and "Microstrip" in the Anglo-Saxon literature, respectively;
- Capacitors - Fig. 7;
- Resistors - Fig. 2;
- Inductors - Fig. 5;
- Transformers - Fig. 4;
- Radio frequency antennas - Fig. 6;
- Capacitive sensors - Fig. 3;

- For this technology, the following applications stand out:

  ◦ Heating bands;
  ◦ Touch keyboards;
  ◦ Antennas;
  ◦ Capacitive sensors;
  ◦ Motion sensors;
  ◦ Conductors for connection of other elements;
  ◦ Resonant circuits;
  ◦ Creation of interactive textile surfaces conjugating the above described elements.

The object (2) may be fabricated using various color combinations and aesthetic elements, for example an image which will be the front part of the hot-transfer device when applied, and will hide and protect the electrical circuit.

The hot-transfer device is applied on the final surface through a hot pressing process according to predetermined pressure and temperature parameters that may vary depending on the substrate or fabric type, which preferably are the following:

- Temperature: 120 °C to 180 °C
- Pressure: 2 bar to 6 bar
- Time: 8s to 30s.

In many applications, the hot-transfer adhesive elements of the present invention will have wires connecting the embedded electronic elements to the exterior. These conductive wires will pass through the textile substrate where the device is applied and eventually connect to other electrical or electronic equipment.

There are applications, such as the case of a glove described in the embodiments of the present invention, in which it is not necessary to connect the electric circuit to the exterior.

**Embodiments**

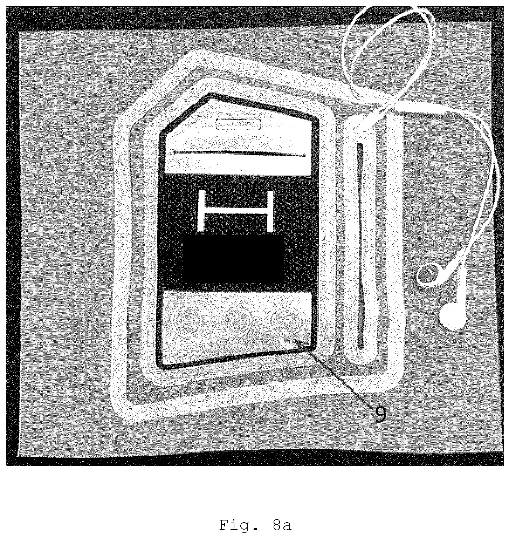

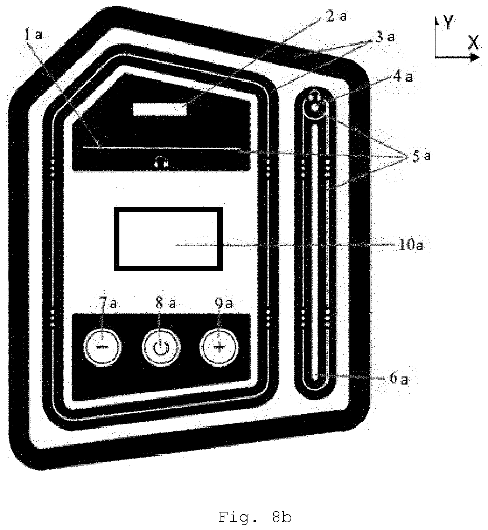

A preferred embodiment of the present invention is shown in Figs. 8a and 8b and relates to a functional pocket with seamless sealing system and integrated lighting/signaling system, which may be included in various clothing from which work and sport clothes stand out. It is a prefabricated product that can be applied by a textile manufacturer using a pressing and temperature process according to predetermined conditions.

The hot-transfer device object of the present invention is transferred to a fabric and has passive electronic components for lighting/signaling incorporated in the intermediate layers (3) and (4). Thus, one has a fabric where an integrated lighting/signaling system is printed.

In addition to this embodiment, the hot-transfer device has layers of paint and adhesive with thicknesses that are defined in order to allow gluing the pocket fabric on the area (3a) of the final textile product for which it is intended and, when in the finishing phase, the aperture areas in the fabric (5a) can be sealed. The thickness of the paint layers (3) and (4) and the adhesive/glue layer (5) have been reinforced, wherein the sum of the thicknesses of the paint layers (3) and (4) can range from 100μm to 150μm and the thickness of the adhesive layer (5) can range from 80 μm to 200 μm.

The pocket consists of two compartments intended for various objects, namely a specific power supply for the lighting system and wearable portable equipment. The lighting system is activated by means of touch keys on the front of the pocket.

Figs. 8a and 8b show that the pocket consists of two separate compartments for various objects, namely the specific power supply for the lighting system and portable equipment for recording and monitoring physical activity, music reproduction, radio, mobile phones, pocket computers and other wearable elements.

It should be noted that the operation and control of the lightning indicator depends on the connection to the specific power supply, and the following functionalities stand out:

- Lighting/signaling system with active lighting (2a), preferably a lamp (battery powered).
- Two separate compartments with respective openings (1a) and (6a).
- Specific eyelet (4a) with reinforcement for earphone/microphone cable passage.
- Touch keys for control of the lighting/signaling system - increase or decrease of brightness, (7a) and (9a) respectively, and on/off (8a) - it should be referred that, when the keys "-" and "+" are touched simultaneously, one can activate/deactivate the flashing light signaling mode;
- Signaling mode in which a flashing light is produced, activated and deactivated by touching simultaneously the keys (7a) and (9a).

There may also exist separate text elements depending on the application or brand (10a) of the final product.

In another embodiment of the object of the present invention regarding a functional glove for controlling screens and touch keyboards, which has integrated textile hot-transfer adhesive elements incorporating embedded electronic components that endow the glove with the ability of controlling touch screens (B), in particular the capacitive ones. The main function of the "transfer" in the glove is to promote the capacitive coupling between the human body and the tactile device when the glove is dressed, thus allowing or improving the experience of using the equipment with gloves. To this end, there is an intermediate layer of special paint, usually hidden, protected by the visible layers.

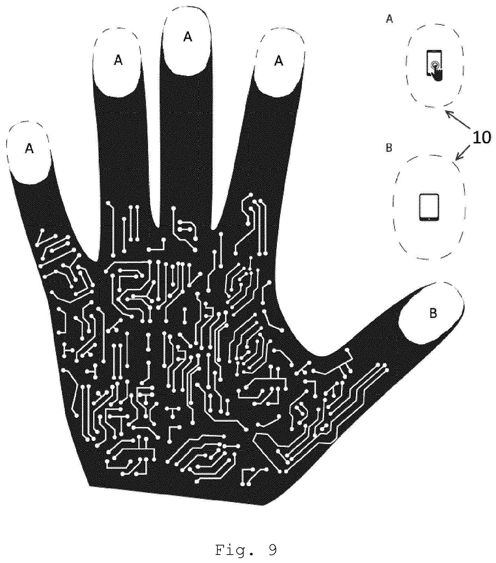

The textile hot-transfer adhesive elements with embedded electronic components (A) are applied to the glove parts that the user will use for screen control, generally where the fingertips are located, Fig. 3. This application is made by a hot pressing process, according to predefined parameters that may vary depending on the final part and/or the fabric type. In the same glove there may also exist hot-transfer adhesive elements with different sizes, shapes or patterns, as exemplified in Fig. 9.

As will be apparent to one skilled in the art, the present invention should not be limited to the embodiments described herein, and a number of changes which remain within the scope of the present invention are possible.

Obviously, the preferred embodiments presented above are combinable, in the different possible forms, although here the repetition of all such combinations is avoided.

**Claims**

1. Hot-transfer adhesive element, made by a screen printing process, **characterized in that** it comprises:

   a) carrier film (1);
   b) object (2), preferably flexible paints;
   c) adhesive layer (5) on a carrier film (1) doped with a substance promoting the release of the element (2);
   d) at least one intermediate layer of electrically conductive material (3) and/or low resistivity conductive material (4), located between the object (2) and the adhesive layer (5) and conjugated with layers of insulating material.

2. Hot-transfer adhesive element according to claim 1, **wherein** it capacity is expressed by the formula:

$$C = \frac{A \times \varepsilon_0 \times \varepsilon_\tau}{d},$$

   where

   $C$ is the capacity expressed in Faraday;
   $A$ is the area where the plates are overlapping (m$^2$);
   $\varepsilon_0$ is the dielectric constant of free space ($\varepsilon_0 \approx 8,854 \times 10^{-12}$ F·m$^{-1}$);
   $\varepsilon_\tau$ is the dielectric constant of the material used as insulator;
   d is the thickness of the insulation layer.

3. Hot-transfer adhesive element according to the preceding claims, **wherein** it is textile materials.

4. Hot-transfer adhesive element according to the preceding claims, **wherein** the intermediate layers (3) and (4) consist of paints formulated with conductive materials.

5. Hot-transfer adhesive element according to the preceding claim, **wherein** the conductive materials constituting the electrically conductive paints are carbon, graphite, graphene, silver and copper.

6. Hot-transfer adhesive element according to the preceding claims, **wherein** the structures of the electronic components, as well as the connections to the exterior, are drawn in the conductive paint layers (3) and (4).

7. Hot-transfer adhesive element according to the preceding claims, **wherein** they have three intermediate layers between the object (2) and the adhesive layer (5):

   a) the first intermediate layer of conductive material;
   b) a second intermediate layer of insulating material; and
   c) a third intermediate layer of conductive material.

8. Hot-transfer adhesive element according to the preceding claims, **wherein** it consist of two intermediate layers between the object (2) and the layer (5):

   a) the first intermediate layer (3) is a rectangle of conductive material with electrical resistivity;
   b) the second intermediate layer (4) is made of an electrically conductive material and it comprises two rectangles at the ends of the layer (3).

Fig. 1

Fig. 2

Fig. 3

Fig. 4

EP 3 351 606 A1

Fig. 5

Fig. 6

Fig. 7

9

Fig. 8a

Fig. 8b

Fig. 9

Europäisches
Patentamt

European
Patent Office

Office européen
des brevets

# EUROPEAN SEARCH REPORT

**Application Number**

EP 18 15 0233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/318699 A1 (LONGINOTTI-BUITONI GIANLUIGI [US] ET AL) 30 October 2014 (2014-10-30) * paragraphs [0004], [0045], [0085], [0333], [0390]; claims 1-31; figures 1,10,12,19,28 * | 1-8 | INV. C09J7/29 |
| X | WO 2015/138515 A1 (L I F E CORP S A [LU]) 17 September 2015 (2015-09-17) * paragraphs [00014], [000262], [000264], [000276]; figure 39 * | 1-8 | |
| X | US 2016/007475 A1 (ZANESI DAVIDE [IT]) 7 January 2016 (2016-01-07) * paragraphs [0004], [0005], [0093]; claims 1-16; figures 1-5 * | 1-8 | |
| X | US 2011/128726 A1 (MORESHEAD WYLIE [US]) 2 June 2011 (2011-06-02) * paragraphs [0019], [0030], [0063]; figures 1,3,5,10-13 * | 1-8 | |
| X | US 6 395 121 B1 (DE BASTIANI NORMAN P [US]) 28 May 2002 (2002-05-28) * columns 1-4; figures 1,2 * | 1-8 | TECHNICAL FIELDS SEARCHED (IPC) C09J |
| X | US 6 136 127 A (DE BASTIANI NORMAN P [US]) 24 October 2000 (2000-10-24) * columns 1-6; figures 1-5 * | 1-8 | |

The present search report has been drawn up for all claims

| Place of search | Date of completion of the search | Examiner |
|---|---|---|
| Munich | 5 June 2018 | Alevizopoulou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 18 15 0233

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2018

| Patent document cited in search report | | Publication date | Patent family member(s) | | Publication date |
|---|---|---|---|---|---|
| US 2014318699 | A1 | 30-10-2014 | US 2014318699 A1<br>US 2015143601 A1 | | 30-10-2014<br>28-05-2015 |
| WO 2015138515 | A1 | 17-09-2015 | CA 2941872 A1<br>CN 106413547 A<br>EP 3116395 A1<br>JP 2017512542 A<br>KR 20170009823 A<br>WO 2015138515 A1 | | 17-09-2015<br>15-02-2017<br>18-01-2017<br>25-05-2017<br>25-01-2017<br>17-09-2015 |
| US 2016007475 | A1 | 07-01-2016 | EP 2965597 A1<br>US 2016007475 A1<br>WO 2014135958 A1 | | 13-01-2016<br>07-01-2016<br>12-09-2014 |
| US 2011128726 | A1 | 02-06-2011 | NONE | | |
| US 6395121 | B1 | 28-05-2002 | US 6395121 B1<br>WO 0045674 A1 | | 28-05-2002<br>10-08-2000 |
| US 6136127 | A | 24-10-2000 | CN 1322166 A<br>EP 1126973 A1<br>HK 1041240 A1<br>ID 28832 A<br>JP 2002526942 A<br>KR 100422315 B1<br>TW I220882 B<br>US 6136127 A<br>WO 0020214 A1 | | 14-11-2001<br>29-08-2001<br>27-05-2005<br>05-07-2001<br>20-08-2002<br>11-03-2004<br>11-09-2004<br>24-10-2000<br>13-04-2000 |

EPO FORM P0459

For more details about this annex : see Official Journal of the European Patent Office, No. 12/82